# EUROPÄISCHE PATENTSCHRIFT

(11) **EP 3 737 511 B1**
(45) Veröffentlichungstag und Bekanntmachung des Hinweises auf die Patenterteilung: **05.06.2024**
(21) Anmeldenummer: 19701434.3
(22) Anmeldetag: 11.01.2019
(51) Int. Cl.: B08B 3/02, B08B 5/02, B08B 1/00, F16K 31/60

(54) **REINIGUNGSSYSTEM MIT EINER EINRICHTUNG ZUM AUSBRINGEN EINES GEMISCHES MIT JUSTIEREINRICHTUNG UND AKTIVIERUNGSBEREICHEN**
CLEANING SYSTEM WITH A DEVICE FOR DISPENSING A MIXTURE COMPRISING AN ADJUSTING DEVICE AND ACTIVATION AREAS
SYSTÈME DE NETTOYAGE AVEC UN DISPOSITIF POUR APPLIQUER UN MÉLANGE COMPRENANT UN DISPOSITIF DE RÉGLAGE ET DES ZONES D'ACTIVATION

(30) Priorität: 12.01.2018 DE 102018100648
(43) Veröffentlichungstag der Anmeldung: 18.11.2020
(73) Patentinhaber: Gmeilbauer, Engelbert, 82229 Seefeld (DE)
(72) Erfinder: Gmeilbauer, Engelbert, 82229 Seefeld (DE)
(74) Vertreter: LS-MP von Puttkamer Berngruber Loth Spuhler
(86) Internationale Anmeldenummer: PCT/DE2019/100023
(87) Internationale Veröffentlichungsnummer: WO 2019/137582

(56) Entgegenhaltungen:
- DE-A1- 3 400 568
- DE-U1-202013 101 261
- FR-A- 1 332 196
- NL-A- 261 473
- US-A- 4 222 521
- US-A1- 2006 130 913
- US-A1- 2013 001 318

## Beschreibung

Die Erfindung betrifft ein System zum Reinigen von Gegenständen nach dem Oberbegriff des Anspruchs 1.

### Stand der Technik

Aus der DE 10 2012 110 844 A1 ist ein Handstück für ein Dampfsauggerät bekannt. Das Handstück umfasst einen Saugeinlass und eine Saugleitung, die mit dem Saugeinlass in Strömungsverbindung für Saugluft steht.

Das Handstück umfasst darüber hinaus einen Dampfauslass und eine Dampfleitung, die mit dem Dampfauslass in Verbindung steht.

Weitere aus dem Stand der Technik bekannte Systeme zum Reinigen von Gegenständen weisen vielfach einen Fluidbehälter auf, der am Griffstück angebracht ist. Diese Anordnung erweist sich als nachteilig, da der Arm des Benutzers aufgrund des erhöhten Gewichts des Griffstücks schnell ermüdet.

Eine zielgenaue Führung der Reinigungsvorrichtung über den Handgriff, mit dem daran angeordneten Fluidtank ist nur erschwert möglich.

Das Dokument US 2013/001318 A1 offenbart ein Reinigungssystem gemäß dem Oberbegriff des Anspruchs 1.

### Aufgabe der Erfindung

Die vorliegende Erfindung stellt sich daher die Aufgabe, derartige Nachteile bekannter Systeme zum Reinigen von Gegenständen auszuräumen.

Darüber hinaus stellt sich die Erfindung die weitere Aufgabe, ein System zum Reinigen von Gegenständen bereitzustellen, bei dem ein Druckluft-Fluid-Gemisch bedarfsgerecht zusammen gemischt werden kann.

Eine weitere Aufgabe der Erfindung besteht darin, ein Reinigungssystem zu schaffen, bei dem die Intensität der Reinigung dem Grad der Verschmutzung angepasst werden kann.

Eine zusätzliche Aufgabe der Erfindung ist darin zu sehen, ein System zum Reinigen von Gegenständen bereitzustellen, mit dem nach dem Aufbringen der Reinigungsflüssigkeit die gelösten Schmutzpartikel und/oder die Reinigungsflüssigkeit vom gereinigten Gegenstand entfernt werden können.

Diese Aufgaben werden gelöst durch das Reinigungssystem gemäß Anspruch 1.

Das System umfasst erfindungsgemäß eine Leitung zur Führung von Luft, vorzugsweise Druckluft. Im Weiteren wird vereinfachend davon ausgegangen, dass die Leitung Druckluft führt.

Die Druckluft wird durch die Luftleitung einer Auslasseinrichtung zur Freisetzung der Druckluft zugeführt.

Die Auslasseinrichtung bezeichnet ein vorzugsweise rohrförmiges, zylindrisches Rohr. Die Auslasseinrichtung kann als Trichter ausgebildet sein. Die Auslasseinrichtung kann einen runden, ovalen, eckigen oder jeden anderen Querschnitt haben.

Zumindest bereichsweise ist im Inneren der Luftleitung eine Fluidleitung angeordnet, in der das Fluid innerhalb der Luftleitung in Richtung der Auslasseinrichtung führbar ist. Im Allgemeinen bezeichnet der Begriff Fluid ein fließfähiges Gas oder eine Flüssigkkeit. Im Zusammenhang mit der Erfindung bezeichnet der Begriff Fluid ein flüssiges, fließfähiges Medium.

Es ist eine Ventileinrichtung vorgesehen, die wenigstens zwei Ventile umfasst.

Das eine Ventil steuert den Zustrom der Luft, vorzugsweise der Druckluft in Richtung auf die Auslasseinrichtung hin, während das weitere Ventil den Zustrom des Fluids, vorzugsweise des Reinigungsmittels in Richtung zur Auslasseinrichtung steuert.

Die wenigstens zwei Ventile regeln das Volumen und/oder den Druck der Druckluft in der Luftleitung gegenüber dem Volumen und/oder dem Druck des Fluids in der Fluidleitung.

In einer bevorzugten Ausführung der Erfindung können die wenigstens zwei Ventile einzeln oder gemeinsam angesteuert werden.

Die Luftleitung mündet zusammen mit der sich im Inneren der Luftleitung erstreckenden Fluidleitung in einen Anschlussflansch ein.

Der Anschlussflansch erstreckt sich dabei axial in Strömungsrichtung der Druckluft und ist um seine Längsachse radial drehbar angeordnet.

In Strömungsrichtung der Druckluft gesehen an seinem hinteren Ende mündet der Anschlussflansch in eine Auslasseinrichtung ein.

Die Auslasseinrichtung weist an dem vom Anschlussflansch abgewandten Ende eine Öffnung auf. Die Luft, vorzugsweise die Druckluft strömt an dem flanschseitigen Ende in die Auslasseinrichtung ein und wird durch die Öffnung der Auslasseinrichtung freigesetzt.

Die Fluidleitung erstreckt sich zumindest bereichsweise axial im Inneren des Anschlussflansches und/oder im Inneren der Auslasseinrichtung.

Das in der Fluidleitung geführte Fluid, vorzugsweise das Reinigungsmittel wird zumindest bereichsweise im Anschlussflansch und/oder in der Auslasseinrichtung aus der Fluidleitung freigesetzt.

Das freigesetzte Fluid wird im Anschlussflansch und/oder in der Auslasseinrichtung von dem Druckluftstrom erfasst und mitgerissen. Das auf diese Weise im Anschlussflansch und/oder in der Auslasseinrichtung gebildete Druckluft-Fluid-Gemisch tritt durch die Öffnung der Auslasseinrichtung in die Einrichtung zum Ausbringen des Gemisches aus.

Erfindungsgemäß ist die Auslasseinrichtung mit dem Anschlussflansch radial um die Längsachse der Fluidleitung drehbar angeordnet.

Die Auslasseinrichtung weist gegenüber der Längsachse des Anschlussflansches wenigstens eine Biegung auf. Auf Grund der wenigstens einen Biegung endet die Auslasseinrichtung exzentrisch zur Längsachse des Anschlussflansches, so dass das Druckluft-Fluid-Gemisch exzentrisch zur Längsachse des Anschlussflansches aus der Auslasseinrichtung in die Einrichtung zum Ausbringen des Gemisches austritt.

Das System zum Reinigen von Gegenständen umfasst erfindungsgemäß eine Einrichtung zum Ausbringen des Gemisches. Die Einrichtung zum Ausbringen des Gemisches kann die Form eines tüllenförmigen Rohrprofils annehmen, das die Luftleitung und/oder die Fluidleitung dichtend umschließt.

Das tüllenförmige Rohrprofil übergreift in Strömungsrichtung der Druckluft gesehen axial und radial, zumindest bereichsweise, die Luftleitung und/oder den Anschlussflansch und/oder die Auslasseinrichtung.

Zumindest bereichsweise weist die Einrichtung zum Ausbringen des Gemisches, vorzugsweise das Rohrprofil eine Tüllenform mit radialen Umfang auf. In der Einrichtung zum Ausbringen des Gemisches ist der Anschlussflansch um seine Längsachse radial drehbar angeordnet.

Die mit dem Anschlussflansch verbundene Auslasseinrichtung ist mit der sich im Inneren der Auslasseinrichtung erstreckenden Fluidleitung exzentrisch um die Längsachse des Anschlussflansches rotierbar.

Erfindungsgemäß weist das Reinigungssystem einen weiteren Flansch auf, an dem wenigstens ein Absaugrohr insbesondere eines Staubsaugers ankoppelbar ist.

Erfindungsgemäß hat das System ein Gehäuse, das die Luftleitung und/oder die gasführende Leitung und/oder die wenigstens zwei Ventile und einen Griff umfasst.

### Gehäuse

Das Gehäuse kann aus Kunststoff oder aus Metall gefertigt sein und zu Wartungs- und/oder zu Reparaturzwecken vorzugsweise mit wenigstens einem Schnellspanner geöffnet werden.

Das Gehäuse weist vorzugsweise wenigstens eine Gummidichtung auf, die die einzelnen im Gehäuse beherbergten Komponenten gegeneinander und gegen die Druckluft und/oder gegen das Fluid abdichtet.

Die einzelnen Komponenten des Gehäuses wie z.B. die Luftleitung und/oder Fluidleitung und/oder die Ventileinrichtung können in modularer Bauweise an das Gehäuse ankoppelbar und von diesem auch wieder lösbar sein.

Die Anordnung der Luftleitung und/oder der Fluidleitung im Gehäuse ist so ausgebildet, dass die Druckluft- und die Fluidförderung geradlinig verlaufen. Dies erweist sich als vorteilhaft, da das Gehäuse technisch einfacher herstellbar ist und die Druckluft- und/oder Fluidförderung unter einem geringeren Energieaufwand erfolgen kann.

Der modulare Aufbau des Gehäuses erhöht die Variabilität des Systems, da das System zur Reinigung von Gegenständen mit Komponenten anderer Reinigungssysteme kombiniert werden kann.

Ein weiterer Vorteil besteht darin, dass das Gehäuse die Luftleitung und/oder die Fluidleitung und/oder das Absaugrohr lösbar miteinander verbindet.

Das Gehäuse ist so ausgebildet, dass vorzugsweise die Luftleitung, das Gehäuse selbst oder wenigstens eine andere der vorausgehend erwähnten Komponenten als Griff verwendbar und/oder als Griff ausgebildet sind. Eine zusätzliche Griffkomponente ist daher nicht erforderlich, was sich positiv auf die Herstellkosten auswirkt.

Das Gehäuse ist jedoch so ausgebildet, dass je nach Bedarf und Einsatzzweck wenigstens ein Griffelement in einem Winkel zur Längsachse des Anschlussflansches vorzugsweise lösbar an das Gehäuse des Systems ankoppelbar ist.

Der Außenumfang des Gehäuses und/oder der Handgriff kann profiliert und/oder aufgeraut und/oder geglättet und/oder beschichtet sein. Im Weiteren wird beispielhaft und nicht ausschließlich von einer Profilierung ausgegangen. Die Profilierung ist vorzugsweise als zu einander beabstandete Rippen oder Stege ausgebildet.

Die Profilierung verhindert, dass sich ausgehend von der Luftleitung und/oder von der Fluidleitung Kälte oder Wärme auf die Hand des Benutzers überträgt.

Zur Erhöhung des Bedienungskomforts kann das Gehäuse Auskerbungen zur Führung der Hand des Benutzers aufweisen.

Das Gehäuse kann an seiner Ober- und/oder an seiner Unterseite und/oder an seinen Seitenwänden Schalter zur Steuerung des Systems zum Reinigen von Gegenständen und insbesondere zur Steuerung der wenigstens zwei Ventile umfassen.

An das Gehäuse ist wenigstens eine Pumpe anschließbar, die die Förderung des Fluids und/oder der Druckluft in der zugehörigen Leitung bewirkt und den jeweiligen Leitungsdruck aufbaut.

Die jeweilige Pumpe kann vorzugsweise über einen Akku elektrisch angetrieben sein.

### Ventileinrichtung

Die vorliegende Erfindung versteht unter dem Begriff "Ventil" ein Bauteil, insbesondere zur Absperrung, Freigabe oder Regelung des Durchflusses von Druckluft und/oder eines Fluids in der zugehörigen Leitung.

In der Luftleitung respektive in der Fluidleitung kann die Druckluftströmung respektive die Fluidströmung in Bezug auf das geförderte Volumen gesteigert, reduziert oder unterbrochen werden. Hierzu wird ein Verschlussteil an eine passend geformte Öffnung angepresst.

Das in der Fluidleitung angeordnete Ventil und das in der Luftleitung angeordnete Ventil können jeweils einzeln oder zusammen Sperrventile, Stromventile, Rückschlagventile, Druckventile oder Wegeventile sein. Es versteht sich von selbst, das die vorhergehende Aufzählung nur exemplarisch und in keiner Weise umfassend gemeint ist.

Die wenigstens zwei Ventile können über manuelle oder elektrische Schalter verfügen.

Es kann ein gemeinsamer Schalter, vorzugsweise ein Schalthebel vorgesehen sein, mit dem wenigstens zwei Ventile gleichzeitig oder zeitlich nacheinander betätigt werden können. Die beiden zeitgleich oder zeitlich nacheinander betätigbaren Ventile steuern zuerst die Druckluftleitung an und dann die Fluidleitung oder umgekehrt.

Es können auch wenigstens zwei separate Schalthebel eines einzelnen Schalters angeordnet sein, die sich unabhängig voneinander bedienen lassen.

Die beiden Schalthebel des Ventils können gleichgroß sein oder eine unterschiedliche Größe aufweisen. Die beiden Schalthebel können ein unterschiedliches Außenprofil aufweisen, damit der Benutzer die beiden Schalthebel allein auf Grund haptischer Unterschiede - ohne die Schalthebel betrachten zu müssen - betätigen kann.

Die Schalter können auch räumlich getrennt voneinander an unterschiedlichen Seiten des Gehäuses angeordnet sein. Beispielsweise kann der Schalter, der den Druckluftstrom steuert auf der Oberseite des Gehäuses angeordnet sein, während der Schalter, der den Fluidstrom in der Fluidleitung regelt, an einer Seitenwand des Gehäuses vorgesehen ist.

Es versteht sich von selbst, dass die Schalter auch an anderen Stellen des Gehäuses angebracht werden können.

Es kann ein einzelner Schalthebel am Gehäuse angeordnet sein, mit dem zuerst das Ventil ansteuerbar ist, das den Druckluftstrom regelt und der zeitlich danach das weitere Ventil ansteuert, mit dem der Fluidstrom regelbar ist.

Hierzu kann der Schalthebel so ausgebildet sein, dass bei manueller Betätigung der Ventile ein am Schalthebel abragendes Profil vorgesehen ist, das bei Betätigung des Schalthebels zuerst den einen und dann den anderen Ventilschalter auslöst.

Die Ventilschalter können jedoch auch so angeordnet sein, dass sie in unterschiedlichen Ebenen zueinander am Gehäuse positioniert sind, so dass der gemeinsame Schalthebel bei der Betätigung zuerst den Schalthebel betätigt, der auf einem höheren Höhenniveau angeordnet ist und zeitlich danach den Schalthebel, der auf dem niedrigeren Höhenniveau positioniert ist.

Die wenigstens zwei Ventilschalter können in etwa achsparallel zu einer Schwenkachse des Schalthebels positioniert sein. Der Ventilschalter des Druckluftventils und der Ventilschalter des Fluidventils können auch in einem Winkel zur Schwenkachse des Schalthebels angeordnet sein.

Die Kontaktfläche des Schalthebels, die zur Betätigung der Ventilschalter mit den Ventilschaltern in Kontakt kommt kann so profiliert sein, dass bei Betätigung des Schalthebels die beiden Ventilschalter zeitlich nacheinander betätigt werden.

Es können auch zwei Ventilschalter vorgesehen sein, die so angeordnet sind, dass der eine Ventilschalter z.B. das Druckluftventil separat und unabhängig z.B. vom Fluidventil schaltet. Der andere Ventilschalter kann z.B. das Fluidventil nur in der Weise schalten, dass die Betätigung des Fluidventils eine vorherige Betätigung des Druckluftventils erfordert.

Eine zeitlich unterschiedliche Ansteuerung der beiden Ventilschalter kann auch dadurch bewirkt werden, dass die räumliche Höhe der Kontaktfläche zur Längsachse des Anschlussflansches des einen Ventilschalters von der räumlichen Höhe der Kontaktfläche zur Längsachse des Anschlussflansches des anderen Ventilschalters abweicht.

Es versteht sich von selbst, dass die zeitliche Abfolge der Ansteuerung des Druckluftventils gegenüber dem Fluidventil und umgekehrt, auch elektronisch oder auf jede andere Art und Weise programmierbar einstellbar ist.

Eine vorbestimmte Ansteuerung vorzugsweise zuerst der Druckluftförderung gegenüber der Ansteuerung des Förderung des Fluids in der Fluidleitung hat den Vorteil, dass vorzugsweise eine Reinigungsflüssigkeit in dem Druckluftstrom zerstäubt oder als Reinigungsnebel auf die zu säubernde Fläche aufgebracht werden kann.

Darüber hinaus kann der Anteil an Reinigungsmittel im Druckluftstrom dem jeweiligen Verschmutzungsgrad angepasst werden.

### Druckluft-Fluid-Mischung

Durch die Steuerung der Zumischung des Fluids, vorzugsweise eines Reinigungsfluids in den Gasstrom, vorzugsweise die Druckluft kann die Dosierung des Reinigungsmittels im Druckluftstrom variiert werden und auf den jeweiligen Verschmutzungsgrad der zu reinigenden Fläche angepasst werden.

Hierdurch wird das Reinigungsmittel besonders sparsam und bedarfsgerecht eingesetzt. Zusätzlich kann neben der Variierung der Fluidmenge auch die Menge und Intensität vorzugsweise an Druckluft variiert werden. Hierdurch kann zusätzlich die Einwirkung des Reinigungsmittels auf die zu säubernde Fläche variiert werden.

Die Zerstäubung und/oder die Vernebelung des Reinigungsmittels im Druckluftstrom kann auf diese Weise optimiert werden.

Der an die Luftleitung und/oder an die Fluidleitung angelegte Druck kann je nach Bedarf erhöht oder abgesenkt werden. Hierdurch kann die Intensität der Verwirbelung der Druckluft-Fluid-Mischung in dem tüllenförmigen Rohrprofil optimiert werden.

### Gasführende Leitung

In Strömungsrichtung der Druckluft gesehen stromabwärts ist an das Gehäuse eine gasführende Leitung abnehmbar angeschlossen. Die gasführende Leitung kann aus Kunststoff oder aus Metall oder aus einem Gewebeschlauch gefertigt sein. Die gasführende Leitung führt wenigstens ein Gas, insbesondere Druckluft oder komprimierte Pressluft durch die gasführende Leitung in Richtung zum Anschlussflansch.

Die Erfindung versteht unter dem Begriff Gas vorzugsweise Luft, umfassend insbesondere die Bestandteile Stickstoff und Sauerstoff. Es versteht sich von selbst, dass im Gas noch andere Bestandteile enthalten sein können.

Zur Erzeugung der Druckluft kann ein Kompressor vorgesehen sein.

Der an die gasführende Leitung anlegbare Druck kann von einer Pumpe erzeugt werden, die an die gasführende Leitung anschließbar ist.

Alternativ kann die Druckbeaufschlagung der gasführenden Leitung auch durch Ankopplung eines herkömmlichen Staubsaugers bewirkt werden.

Darüber hinaus ist auch jede andere Art der Druckerzeugung einsetzbar, um den bedarfsgerechten Druck in der gasführenden Leitung herzustellen.

Die alternativen Möglichkeiten zur Erzeugung von Druckluft in der zugehörigen gasführenden Leitung ermöglichen darüber hinaus die Kombination des Systems zur Reinigung von Gegenständen mit anderen Einrichtungen, wie z.B. einem Staubsauger. Grundsätzlich kann diejenige Druckerzeugungsquelle herangezogen werden, die zur Erzeugung des jeweils nötigen Drucks erforderlich ist.

In Bezug auf die Strömungsrichtung der Druckluft kann das Gehäuse in Strömungsrichtung gesehen, am oberen Ende der gasführenden Leitung angeordnet sein. Das Gehäuse und/oder die darin aufgenommenen Komponenten können im Hinblick auf die Strömungsrichtung der Druckluft auch am stromabwärtigen Ende der Druckluftleitung angeordnet sein.

Alternativ kann das Gehäuse in die Druckluftleitung eingesetzt sein.

Die gasführende Leitung umfasst einen Abschnitt, der die Auslasseinrichtung umfasst. Dieser Abschnitt ist von dem stromaufwärtigen übrigen Abschnitt der gasführenden Leitung getrennt.

Der die Auslasseinrichtung umfassende Abschnitt der gasführenden Leitung ist in axialer Richtung gegen den stromaufwärtigen übrigen Abschnitt der gasführenden Leitung verschiebbar. Der Abstand zwischen gegeneinander gerichtete Stirnseiten des stromaufwärtigen übrigen Abschnitts der gasführenden Leitung und dem Abschnitt der gasführenden Leitung, der die Auslasseinrichtung umfasst ist axial veränderbar.

Der stromaufwärtige übrige Abschnitt und der Abschnitt, der die Auslasseinrichtung umfasst sind mittels eines Anschlussflansches axial gasdicht miteinander verbindbar ausgestaltet.

Die gegeneinander gerichteten Stirnseiten der beiden Abschnitte der gasführenden Leitung ragen in den Anschlussflansch hinein. Der die Auslasseinrichtung umfassende Abschnitt der gasführenden Leitung ist im Inneren des Anschlussflansches gegenüber dem übrigen Abschnitt der gasführenden Leitung gasdicht verschiebbar angeordnet. Zur Abdichtung des Abschnitts, der die Auslasseinrichtung umfasst, gegen den Anschlussflansch kann an der Innenwand des Anschlussflansches ein Dichtungsmittel angeordnet sein.

Die keine Unterbrechungen aufweisende Fluidleitung erstreckt sich Inneren der gasführenden Leitung. Die Fluidleitung überbrückt die Stirnseiten der Abschnitte der gasführenden Leitung im Inneren des Anschlussflansches.

Die im Inneren des Anschlussflansches erlaufenden Abschnitte sowie die Fluidleitung sind gestrichelt dargestellt.

### Fluidleitung

Im Inneren der gasführenden Leitung erstreckt sich eine fluidführende Leitung. Die fluidführende Leitung wird im Weiteren als Fluidleitung bezeichnet.

Die Fluidleitung ist, über Abstandhalter von der Innenwand der gasführenden Leitung beabstandet, im Inneren der gasführenden Leitung angeordnet. Die Fluidleitung kann aber auch in der Wand der gasführenden Leitung verlaufen oder insbesondere stoffschlüssig auf der Innenseite der gasführenden Leitung mit deren Wand verbunden sein.

Die Fluidleitung hat einen Durchmesser, der kleiner ist als der Innendurchmesser der gasführenden Leitung, so dass die durch die gasführende Leitung strömende Druckluft am Außenumfang der Fluidleitung entlang strömt.

Die Fluidleitung kann aus einem Gewebematerial aufgebaut sein oder aus einem Kunststoffmaterial oder aus Metall gefertigt sein. Selbstverständlich kann die Fluidleitung auch aus einem anderen Material hergestellt sein.

In der Fluidleitung strömt ein Fluid, insbesondere eine Flüssigkeit, eine Reinigungsflüssigkeit oder ein Gas.

### Fluidtank

Das Fluid wird vorzugsweise durch eine Pumpe oder eine andere Einrichtung aus einem Fluidtank in Strömungsrichtung der Druckluft in Richtung zu der Auslasseinrichtung gefördert.

Im Bereich des Anschlussflansches und/oder im Bereich der Auslasseinrichtung weist die Fluidleitung Mittel auf, die der Freisetzung des Fluids in die umgebende gasführende Leitung dienen.

Die Mittel zur Freisetzung in der Fluidleitung sind vorzugsweise Öffnungen, Risse oder Durchbrüche. Es können auch andere technische Einrichtungen vorgesehen sein, die eine Eindüsung oder Einspritzung von Fluid in den Druckluftstrom begünstigen.

Zur Druckbeaufschlagung des Fluids in der Fluidleitung ist Druckluft aus der Druckluftleitung in den Fluidtank einführbar.

Ja nach dem, welcher Druck an die Fluidleitung angelegt werden muss, kann der Druck im Fluidtank erhöht oder abgesenkt werden. Darüber hinaus ist auch jede andere technische Einrichtung zur Druckbeaufschlagung der Fluidleitung einsetzbar.

Der Fluidtank kann vom Benutzer wie ein Rucksack auf dem Rücken getragen werden. Der Fluidtank kann auch fahrbar ausgebildet sein oder auf dem Boden abstellbar sein. Es sind auch alle anderen Arten der Anordnung des Fluidtanks einsetzbar.

Beispielhaft kann der Fluidtank eine Kapazität von fünf Litern Fluid, insbesondere Reinigungsmittel aufweisen.

Das Fluid kann ein Gemisch vorzugsweise aus Wasser und einem Reinigungsmittel sein.

Der Fluidtank kann beispielhaft und in keiner Weise ausschließlich mit einem Druck von 3 bar beaufschlagt sein.

### Anschlussflansch

In Strömungsrichtung der Druckluft flussabwärts ist die gasführende Leitung mit der sich in ihrem Inneren erstreckenden Fluidleitung an einen Anschlussflansch angeschlossen.

Die Fluidleitung verläuft entlang der Längsachse des Anschlussflansches durch den Anschlussflansch hindurch und mündet in eine Auslasseinrichtung ein.

Der Anschlussflansch ist radial um seine Längsachse drehbar an der gasführenden Leitung angeordnet.

In Bezug auf die Strömungsrichtung der Druckluft stromabwärts ist der Anschlussflansch an seinem anderen Ende mit der Auslasseinrichtung verbunden, in die die Fluidleitung hineinragt.

Es ist wenigstens ein Lager, vorzugsweise ein Kugellager vorgesehen, um das der Anschlussflansch radial zu seiner Längsachse um die gasführende Leitung herum drehbar ist.

An der Innenwand des Anschlussflansches sind vorzugsweise Leitbleche angeordnet.

Der in den Anschlussflansch einströmende Druckluftstrom trifft auf die in einem Winkel zum Druckluftstrom angeordneten Leitbleche auf, wodurch der Anschlussflansch in eine Radialbewegung relativ zu seiner Längsachse versetzbar ist.

Es versteht sich von selbst, dass der Anschlussflansch auch auf jede andere technische Art und Weise in eine Radialbewegung versetzt werden kann.

In Strömungsrichtung der Druckluft flussabwärts strömt die Druckluft aus dem Anschlussflansch in die Auslasseinrichtung hinein.

Die Druckluft umströmt in der Auslasseinrichtung die im Inneren der Auslasseinrichtung sich erstreckende Fluidleitung.

Im Bereich des Anschlussflansches und/oder im Bereich der Auslasseinrichtung weist die Fluidleitung Mittel zur Freisetzung des Fluids in die Druckluft auf, die in der Auslasseinrichtung entlangströmt.

Durch Ausströmen des Fluids aus der Fluidleitung durch die Mittel zur Freisetzung entsteht im Auslasseinrichtung die Druckluft-Fluid-Mischung. Die Druckluft-Fluid-Mischung strömt in der Auslasseinrichtung in Strömungsrichtung flussabwärts der wenigstens einen Öffnung der Auslasseinrichtung zu.

### Auslasseinrichtung

In dem Bereich, in dem der Druckluftstrom in der Auslasseinrichtung an den Mitteln zur Freisetzung des Fluids aus der Fluidleitung entlangströmt entsteht in der Auslasseinrichtung ein Unterdruck, durch den der Druckluftstrom kontinuierlich Fluid aus der Fluidleitung heraussaugt und mitreißt.

In Strömungsrichtung der Druckluft flussabwärts ist eine Auslasseinrichtung mit dem hinteren Ende des Anschlussflansches drehfest verbunden.

Mit der Drehung des Anschlussflansches um seine Längsachse wird auch die Auslasseinrichtung in eine Rotation um die Längsachse des Anschlussflansches versetzt.

Die Auslasseinrichtung ist gegenüber der Längsachse des Anschlussflansches wenigstens einmal gekrümmt, so dass die Öffnung der Auslasseinrichtung, durch die das Druckluft-Fluid-Gemisch freisetzbar ist exzentrisch zur Längsachse des Anschlussflansches ausgerichtet ist.

Durch die wenigstens einfache Krümmung der Auslasseinrichtung und die exzentrische Anordnung der Öffnung der Auslasseinrichtung gegenüber der Längsachse des Anschlussflansches wird das Druckluft-Fluid-Gemisch in die Einrichtung zum Ausbringen des Gemisches, vorzugsweise in das tüllenförmige Rohrprofil verwirbelt.

Die Verwirbelung erfolgt innerhalb der Einrichtung zum Ausbringen des Gemisches radial zur Längsachse des Anschlussflansches und axial zur Längsachse des Anschlussflansches nach vorne in Richtung auf die zu säubernde Oberfläche hin.

Der Vorteil dieser Anordnung besteht darin, dass das verwirbelte Druckluft-Fluid-Gemisch je nach der Intensität des an die Auslasseinrichtung angelegten Drucks mit unterschiedlicher Intensität auf die zu reinigende Fläche auftrifft und die Schmutzpartikel löst.

In Abhängigkeit der Verschmutzung kann der Druck in der Druckluftleitung erhöht oder abgesenkt werden.

Je nach Ausgestaltung der Biegungen der Auslasseinrichtung kann ein in etwa rundes oder ein ovales Verwirbelungsbild entstehen.

Die Auslasseinrichtung kann weitere Öffnungen umfassen. Hierzu sind an der Auslasseinrichtung seitlich abragend Stutzen angeordnet, die jeweils eine Fluidleitung aufnehmen und jeweils in eine weitere Öffnung münden, durch die das Druckluft-Fluid-Gemisch in die Einrichtung zum Ausbringen des Gemisches austritt.

Auf diese Weise können weitere Verwirbelungsbilder geschaffen werden, wodurch die Reinigungsintensität deutlich gesteigert werden kann.

### Körper zur mechanischen Reinigung der Oberfläche

Die Auslasseinrichtung weist einen Körper zum mechanischen Reinigen der Oberfläche auf.

Der Körper ist bürstenförmig ausgestaltet. Der Köper kann auch ein Schwamm oder ein Drahtgebilde zum mechanischen Reinigen sein. Der Körper kann auch ein anderes Element zu mechanischen Reinigen einer Oberfläche sein.

Der Körper ist an der Auslasseinrichtung angeordnet.

Die Auslasseinrichtung umfasst einen sich entlang der Längsachse der gasführenden Leitung erstreckenden Abschnitt. Der Körper zum Reinigen der Oberfläche ist an dem Abschnitt der Auslasseinrichtung angeordnet, der sich entlang der Längsachse der gasführenden Leitung erstreckt.

In axialer Richtung ragt das stromabwärts liegende Ende des Körpers um Reinigen der Oberfläche nicht über das stromabwärts liegende Ende der Auslasseinrichtung hinaus.

Die Auslasseinrichtung umfasst weiter einen, sich an den entlang der Längsachse der gasführenden Leitung erstreckenden Abschnitt stromabwärts anschließenden exzentrisch zur Längsachse der gasführenden Leitung erstreckenden weiteren Abschnitt.

Der Körper zum Reinigen der Oberfläche (nicht gezeigt) kann auch an dem Ende des sich stromabwärts anschließenden, exzentrisch zur Längsachse der gasführenden Leitung verlaufenden weiteren Abschnitts angeordnet sein.

Die Auslasseinrichtung ist mit dem Anschlussflansch verbunden. Eine Rotation des Anschlussflansches bewirkt eine Rotation der Auslasseinrichtung. Die Rotation der Auslasseinrichtung bewirkt eine Rotation des an der Auslasseinrichtung angeordneten Körpers zum Reinigen der Oberfläche mit der Auslasseinrichtung. Der Körper zum Reinigen der Oberfläche rotiert im Inneren einer Umhüllung, die die Auslasseinrichtung radial umgibt.

Am Ende der Umhüllung ist ein Adapter (nicht gezeigt) angeordnet. Die Umhüllung ist als hüllenförmiges Rohrprofil ausgestaltet.

Die Umhüllung ist gegenüber dem Gehäuse (nicht gezeigt) radial drehbar. Umgekehrt kann das Gehäuse (nicht gezeigt) gegenüber der die Umhüllung radial drehbar angeordnet sein.

Die Anordnung des Körpers zur mechanischen Reinigung der Oberfläche erweist sich als vorteilhaft, da auf diese Weise die Reinigung der Oberfläche mittels eines Gas-Flüssigkeits-Gemisches durch eine mechanische Reinigung mittels eines Körper zum mechanischen Reinigen der Oberfläche unterstützt werden kann.

### Einrichtung zum Ausbringen des Gemisches

Die Einrichtung zum Ausbringen des Gemisches kann die Form eines tüllenförmigen Rohrprofils annehmen. Die Einrichtung kann aus Kunststoff oder aus Metall oder aus einem anderen Werkstoff gefertigt sein.

Die Einrichtung kann lösbar am Gehäuse oder einer Komponente des Gehäuses angeordnet werden. Die Einrichtung zum Ausbringen des Gemisches kann vorzugsweise mit einem

Bajonettverschluss am Gehäuse angeordnet werden. Sie kann aber auch auf eine andere technische Art und Weise am Gehäuse befestigt werden. Die Einrichtung zum Ausbringen des Gemisches kann an einer Komponente des Gehäuses, vorzugsweise an der Druckluftleitung, angeordnet sein.

Die Einrichtung zum Ausbringen des Gemisches kann einen kreisförmigen oder ovalen Querschnitt aufweisen. Sie kann zylinderförmig ausgebildet sein oder einen sich in Richtung auf ihre Auslassmündung hin weitenden Durchmesser aufweisen.

Im Bereich des Endes der Einrichtung zum Ausbringen des Gemisches, das der Auslassmündung gegenüberliegt kann ein Absaugschlauch angeflanscht werden.

Der Absaugschlauch kann flexibel ausgebildet sein und aus einem Geflecht gefertigt sein. Der Absaugschlauch kann auch aus Gummi, Kunststoff oder Metall gefertigt sein.

Der Absaugschlauch ist mit einem Staubsauger verbindbar. Mithilfe des Absaugschlauches können die Schmutzpartikel und/oder das Fluid, insbesondere das Reinigungsfluid und/oder die Druckluft von der zu reinigenden Oberfläche abgesaugt werden, nachdem die zu reinigende Oberfläche durch das Druckluft-Fluid-Gemisch gereinigt worden ist.

### Beleuchtungselement

Im Inneren der Einrichtung zum Ausbringen des Gemisches, vorzugsweise im Bereich seiner Auslassmündung kann wenigstens ein Beleuchtungselement angeordnet sein.

Das Beleuchtungselement kann ein LED-Leuchtmittel oder auch ein anderes Leuchtmittel sein.

Das Beleuchtungselement kann auch an der Außenseite der Einrichtung zum Ausbringen des Gemisches angeordnet sein.

Zur besseren Ausleuchtung der zu säubernden Oberfläche kann das Beleuchtungselement Schwarzlicht emittieren.

### Heizelement

Vorzugsweise im Inneren der Einrichtung zum Ausbringen des Gemisches kann wenigstens ein Heizelement vorgesehen sein. Das Heizelement kann als Heizdraht ausgebildet sein. Es ist auch jedes andere technische Mittel zur Ausbildung eines Heizelements anwendbar.

Vorzugsweise ist das Heizelement im Bereich der Auslassmündung der Einrichtung zum Ausbringen des Gemisches angeordnet. Das Heizelement kann mit Betätigung des Systems zum Ausbringen des Gemisches automatisch zugeschaltet werden. Es kann jedoch auch vom Benutzer wahlweise zu- und abgeschaltet werden.

Die Anordnung eines Heizelements erweist sich als vorteilhaft, da die Druckluft und/oder das Fluid vor Aufbringen auf die zu reinigende Oberfläche erwärmt werden kann, wodurch der Reinigungsprozess begünstigt wird.

Die Zuschaltung eines Heizelements kann zum sofortigen Abtrocknen der zu reinigenden Oberfläche eingesetzt werden, um das aufgebrachte Fluid schnellstmöglich von der gereinigten Oberfläche zu entfernen.

### Justiereinrichtung mit Aktivierungsbereichen

Vorzugsweise, aber nicht ausschließlich ist die Justiereinrichtung am Schalthebel bewegbar angeordnet.

Die Justiereinrichtung weist wenigstens zwei Aktivierungsbereiche auf. Die Aktivierungsbereiche weisen eine geometrische Form auf und können rund, gewölbt, eckig, keilförmig oder flächig sein oder jede andere Form aufweisen. Die Justiereinrichtung weist bevorzugt auf ihrer Unterseite die Aktivierungsbereiche auf.

Der Aktivierungsbereich wirkt auf ein Ventil ein, das den Zustrom der Druckluft oder des Fluids steuert.

Die Justiereinrichtung und/oder der Aktivierungsbereich können als Ventil ausgebildet sein, der den Zustrom der Druckluft oder des Fluids steuert.

Die Justiereinrichtung ist längs oder in einem Winkel zum Schalthebel verschiebbar. Zur Verschiebung der Justiereinrichtung ist der Schalthebel in Richtung zum Gehäuse des Systems zum Ausbringen des Gemisches umgeklappt.

Der Benutzer verschiebt die Justiereinrichtung mittels eines Schiebers, der an deren Außenseite, auf der Rückseite des Schalthebels angeordnet ist. Der Schieber kann aber auch an einer anderen Stelle vorgesehen sein. Anstatt eines Schiebers kann auch eine andere Einrichtung zum Bewegen der Justiereinrichtung vorgesehen sein. Die Justiereinrichtung kann in einer Führungsschiene des Schalthebels angeordnet sein.

Vorzugsweise bei der Verschiebung der Justiereinrichtung von der Schwenkachse des Schalthebels weg, bewirkt die Keilform der Justiereinrichtung, dass der Ventilschalter in zunehmendem Maße druckbeaufschlagt wird. Hierdurch wird das Fluidvolumen relativ zur Druckluft gesteigert.

Bei der Verschiebung der Justiereinrichtung zu der Schwenkachse des Schalthebels hin bewirkt eine Verringerung des Fluidvolumens relativ zur Druckluft.

Weitere Vorteile und Ausgestaltungen der Erfindung sind aus der nachfolgenden Zeichnung zu ersehen.

Hierbei zeigen:
Fig. 1 ein System zum Ausbringen von Gemischen,
Fig. 2 ein Gehäuse des Systems mit einer gasführenden Leitung und einer Einrichtung zum Ausbringen des Gemisches,
Fig. 3 ein Gehäuse des Systems mit zwei zu einander versetzt angeordneten Ventilschaltern und einem Schalthebel,
Fig. 4 ein Gehäuse entsprechend Fig. 4 mit rechtwinklig zueinander angeordneten Ventilschaltern,
Fig. 5 das Gehäuse des System zum Ausbringen von Gemischen mit zwei zueinander auf unterschiedlichen Ebenen angeordneten Ventilen,
Fig. 6 das Gehäuse des Systems mit zwei Ventilen und einem schwenkbaren Ventilschalter,
Fig. 7 ein Gehäuse entsprechend Fig. 6 mit zwei auf unterschiedlichen Ebenen angeordneten Kontaktflächen des Ventilschalters,
Fig. 8 ein Gehäuse entsprechend Fig. 6 mit zwei ineinander greifenden Schalthebeln,
Fig. 9 ein Gehäuse entsprechend Fig. 6 mit zwei voneinander unabhängigen Ventilschaltern,
Fig. 10 einen Ausschnitt aus der Fig. 2 mit zwei Abschnitten der gasführenden Leitung und
Fig. 11 eine Justiereinrichtung mit Aktivierungsbereichen.

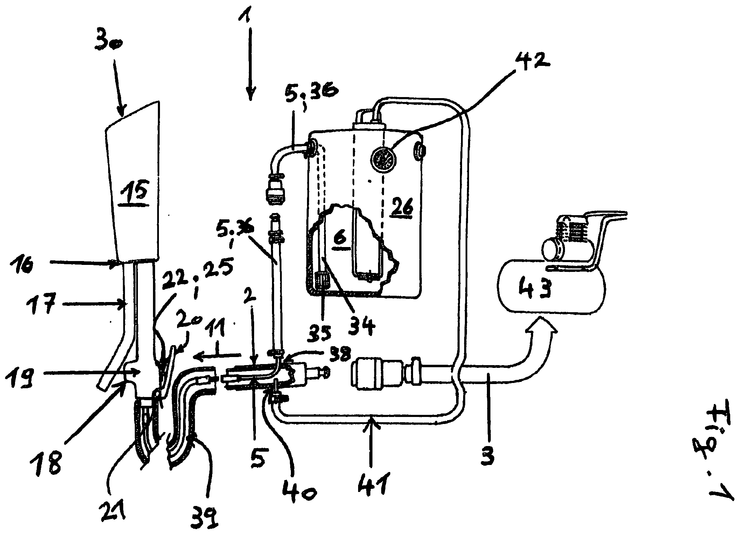

Fig. 1 zeigt ein System 1 zum Ausbringen von Gemischen mit einer gasführenden Leitung 2 und einer in der gasführenden Leitung 2 angeordneten Fluidleitung 5.

Die Fluidleitung 5 wird aus einem Fluidtank 26 mit einem Fluid 6 gespeist. Hierzu ist eine Fluidleitung 5 vorgesehen, die mit einem oberen Ende in einen Fluidtank 26 eingreift.

An seinem oberen Ende 34 weist die Fluidleitung 5 einen Filter 35 auf, der vor der Aufnahme des Fluides 6 in die Fluidleitung 5 Fremdstoffe aus dem Fluid 6 herausfiltert.

Die Fluidleitung 5 ist aus Leitungselementen 36 zusammengesetzt, die mit Hilfe von Verbindungsflanschen miteinander verbunden sind.

An einem Eingang 38 wird die Fluidleitung 5 in die gasführenden Leitung 2 eingeführt.

Die Fluidleitung 5 ist dabei gegen die gasführende Leitung 2 abgedichtet, so dass durch den Eingang 38 keine Druckluft 3 entweichen kann.

In Strömungsrichtung 11 der Druckluft 3 stromabwärts erstreckt sich die Fluidleitung 5 im Inneren 39 der gasführenden Leitung 2.

Die gasführende Leitung 2 weist zusätzlich einen Ausgang 40 auf, der über eine Versorgungsleitung 41 mit dem Fluidtank 26 in Verbindung steht.

Die Versorgungsleitung 41 ist im Ausgang 40 gegenüber der gasführenden Leitung 2 abgedichtet, so dass aus dem Ausgang 40 ungewollt keine Druckluft 3 entweichen kann.

Die Versorgungsleitung 41 beaufschlagt den Fluidtank 26 mit Druckluft 3.

Durch die Beaufschlagung des Fluidtanks 26 mit der Druckluft 3 wird das in dem Fluidtank 26 gelagerte Fluid 6 in die Fluidleitung 5 eingepresst.

Im Fluidtank 26 werden die Reinigungsflüssigkeit und das Wasser vermischt. Durch Beaufschlagung des Fluidtanks 36 mit Druckluft 3 wird das im Fluidtank 26 angeordnete Wasser mit dem ebenfalls im Fluidtank 26 befindlichen Reinigungsmittel vermischt.

Zur Messung des Drucks innerhalb des Fluidtanks 26 ist ein Manometer 42 vorgesehen.

In Draufsicht auf der rechten Seite der Fig. 1 ist ein Generator 43 dargestellt, der die gasführende Leitung 2 mit Druckluft 3 beaufschlagt.

In Strömungsrichtung 11 der Druckluft 3 stromabwärts erstreckt sich die Fluidleitung 5 im Inneren 39 der gasführenden Leitung 2.

Die aus den Leitungselementen 36 zusammengesetzte Fluidleitung 5 mündet zusammen mit der die Fluidleitung 5 umgebenden gasführenden Leitung 2 in das Gehäuse 19 des Systems 1 zum Ausbringen eines Gemisches.

Das Gehäuse 19 umfasst einen schematisch dargestellten Griff 18 auf der Unterseite des Gehäuses 19, die der Oberseite des Gehäuses 19 gegenüberliegt, an der die Ventilschalter 22; 25 der (nicht gezeigten) Ventile 8; 9 angeordnet sind.

Zur Betätigung der Ventilschalter 22; 25 ist in Fig. 1 ein Schalthebel 20 dargestellt, der um eine Schwenkachse 21 schwenkbar angelenkt ist.

Innerhalb des Gehäuses 19 verläuft (nicht sichtbar) die gasführende Leitung 2 und im Inneren der gasführenden Leitung 2 die Fluidleitung 5.

In der schematischen Darstellung der Fig. 1 ist in Strömungsrichtung 11 an der gasführenden Leitung 2 stromabwärts ein tüllenförmiges Rohrprofil 15 dargestellt. An dem Ende des tüllenförmigen Rohrprofils 15, das von dem Gehäuse 19 abgewandt ist, weist das tüllenförmige Rohrprofil 15 eine Auslassmündung 30 auf.

In der Fig. 1 ist das tüllenförmige Rohrprofil 15 im Bereich seiner Auslassmündung 30 abgeschrägt.

Über die axiale Länge des tüllenförmigen Rohrprofils 15 weist das Rohrprofil eine in etwa konische Form auf, bei der der Durchmesser der Einrichtung zum Ausbringen des Gemisches in Form des tüllenförmigen Rohrprofils 15 in Richtung auf die Auslassmündung 30 zunimmt.

An den gehäuseseitigen 19 Enden des tüllenförmigen Rohrprofils 15 erstreckt sich in etwa achsparallel zu dem Gehäuse 19 ein Absaugrohr 17.

Das Absaugrohr 17 ist über einen weiteren Flansch 16 an das tüllenförmige Rohrprofil 15 anschließbar.

Das Absaugrohr 17 ist an einen (nicht gezeigten) Staubsauger angeschlossen.

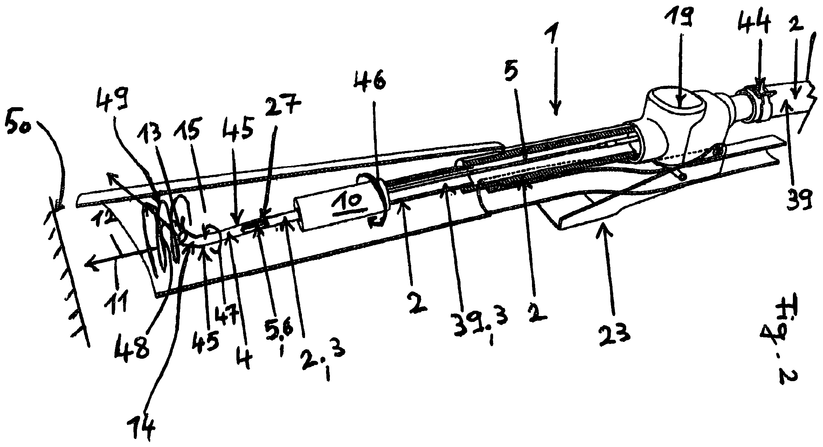

Fig. 2 zeigt ein System 1 zum Ausbringen eines Gemisches mit dem Gehäuse 19, das in Draufsicht der Fig. 2 rechts an die gasführende Leitung 2 mit Hilfe einer Schelle 44 angebunden ist.

Im Inneren 39 der gasführenden Leitung 2 verläuft (nicht dargestellt) die Fluidleitung 5.

Die Fluidleitung 5 erstreckt sich durch das Gehäuse 19 hindurch und tritt auf der in Strömungsrichtung 11 der gasführenden Leitung 2 flussabwärtigen Seite aus dem Gehäuse 19 aus und in das Innere 39 der gasführenden Leitung 2 ein.

Die gasführende Leitung 2 führt die Druckluft 3, die wie in Fig. 1 dargestellt mit Druck beaufschlagt ist.

In Strömungsrichtung 11 der gasführenden Leitung 2 stromabwärts schließt sich an die gasführende Leitung 2 und an die in deren Innerem 39 geführte Fluidleitung 5 ein Anschlussflansch 10 an.

Der Anschlussflansch 10 ist (in Fig. 2 nicht dargestellt) über ein Lager, vorzugsweise ein Kugellager, in Bezug zu seiner Längsachse 12 radial drehbar an der gasführenden Leitung 2 gelagert.

Der Anschlussflansch 10 ist dabei auf seiner einen Seite gegenüber der gasführenden Leitung 2 und auf seiner anderen Seite gegenüber einer Auslasseinrichtung 4 in der Weise abgedichtet, dass keine Druckluft 3 nach Außen in das Innere des tüllenförmigen Rohrprofils 15 hinein entweichen kann.

In Strömungsrichtung 11 der Druckluft 3 flussabwärts mündet der Anschlussflansch 10 in die Auslasseinrichtung 4 ein.

Im Inneren der Auslasseinrichtung 4 erstreckt sich die Fluidleitung 5, die das Fluid 6 transportiert.

Im Inneren der gasführenden Leitung 2 wird die Druckluft 3 in Richtung zu einer Öffnung 13 der Auslasseinrichtung 4 geleitet und umströmt dabei die Außenwand der Fluidleitung 5.

Wie in Fig. 2 dargestellt ist, umfasst das Auslasseinrichtung 4 wenigstens zwei Knicke 45.

Mit der Rotation des Anschlussflansches 10 entsprechend einer Pfeilrichtung 46 rotiert auch die Auslasseinrichtung 4 um die Längsachse 12 des Anschlussflansches 10 in Pfeilrichtung 47.

Durch die in der Auslasseinrichtung 4 angebrachten Knicke 45 weist die Öffnung 13 der Auslasseinrichtung 4 exzentrisch gegenüber der Längsachse 12 in Richtung eines Pfeils 48 nach außen.

Durch die in die Fluidleitung 5 eingebrachten Mittel 27 zur Freisetzung des Fluids 6 in die gasführende Leitung 3 wird das Fluid 6 zur Bildung eines Druckluft-Fluid-Gemisches 14 in die Druckluft 3 eingeführt.

Durch die exzentrisch ausgerichtete Öffnung 13 der Auslasseinrichtung 4 entsteht im Inneren des tüllenförmigen Rohrprofils 15 eine Verwirbelung 49 des Druckluft-Fluid-Gemisches 14.

Die Verwirbelung 49 des Druckluft-Fluid-Gemisches 14 wird entlang der Längsachse 12 des Anschlussflansches 10 in Richtung auf einen zu reinigenden Gegenstand 50 aufgebracht.

In Draufsicht auf die Figur 2 auf der Unterseite des Gehäuses 19 ist ein Ventilschalter 23 eines nicht gezeigten Ventils 8; 9 dargestellt.

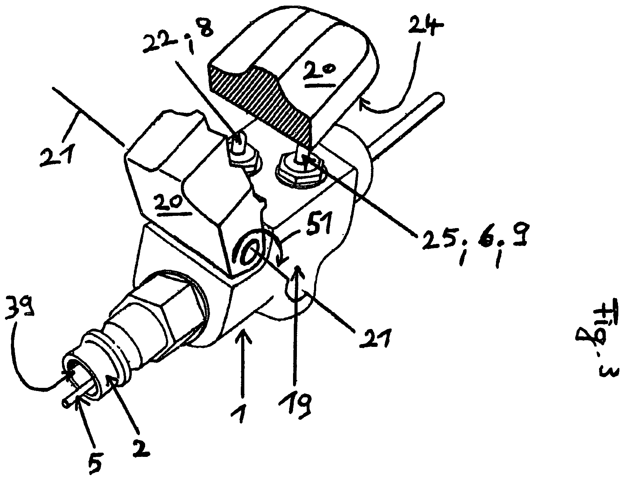

Figur 3 zeigt das Gehäuse 19 des Systems 1 zum Ausbringen des Gemisches. In der Fig. 3 sind die Ventilschalter 22 bzw. 25 und/oder das Druckluftventil 8 bzw. das Fluidventil 9 jeweils versetzt zu einander angeordnet.

Auf der Oberseite des Gehäuses 19 ist ein Ventilschalter 22 für Druckluft 3 und ein Ventilschalter 25 zur Steuerung des Fluidstroms 6 gezeigt.

Das Gehäuse 19 des Systems 1 zum Reinigen von Gegenständen ist von der gasführenden Leitung 2 durchbrochen, in deren Innerem 39 die Fluidleitung 5 geführt ist.

Das Gehäuse 19 ist an der Schwenkachse 21 des Schalthebels 20 schwenkbar gelagert.

Der Schalthebel 20 ist in Figur 3 geschnitten dargestellt. An der Unterseite des Schalthebels 20 ist in der Draufsicht der Figur 3 eine ebene Kontaktfläche 24 dargestellt.

Mit Verschwenkung des Schalthebels 20 um die Schwenkachse 21 kommt der Schalthebel 20 mit seiner Kontaktfläche 24 auf den Ventilschaltern 22; 25 zu liegen.

Verschwenkt der (nicht gezeigte) Benutzer den Schalthebel 20 in Richtung eines Pfeils 51 weiter, so drückt der Schalthebel 20 mit seiner Kontaktfläche 24 gegen den Ventilschalter 22 des Druckluftventils 8 und gleichzeitig drückt der Schalthebel 20 mit seiner Kontaktfläche 24 bei weiterem Verschwenken des Schalthebels 20 in Richtung des Pfeils 51 auch den Ventilschalter 25 des Fluidventils 9 herunter.

Durch Betätigung der Ventilschalter 22 bzw. 25 werden das Druckluftventil 8 bzw. das Fluidventil 9 geöffnet oder geschlossen.

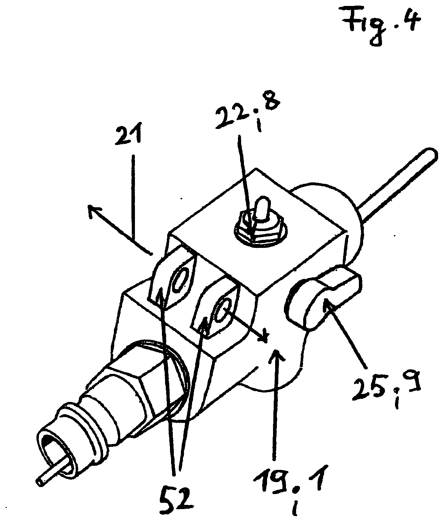

Figur 4 zeigt, das Gehäuse 19 des Systems 1 zum Ausbringen des Gemisches entsprechend der Figur 3, mit dem Unterschied, dass die Schwenklager 52 gezeigt sind, an denen der (nicht dargestellte) Schalthebel 20 um die Schwenkachse 21 herum schwenkbar gelagert ist.

Das Gehäuse 19 nach Figur 4 unterscheidet sich von dem Gehäuse nach Figur 3 dahingehend, dass der Ventilschalter 22 des Druckluftventils 8 auf der Oberseite des Gehäuses 19 in der Darstellung der Figur 4 angebracht ist. Demgegenüber ist der Ventilschalter 25 des Fluidventils 9 an der Seite des Gehäuses 19 des Systems 1 zum Ausbringen des Gemisches angebracht.

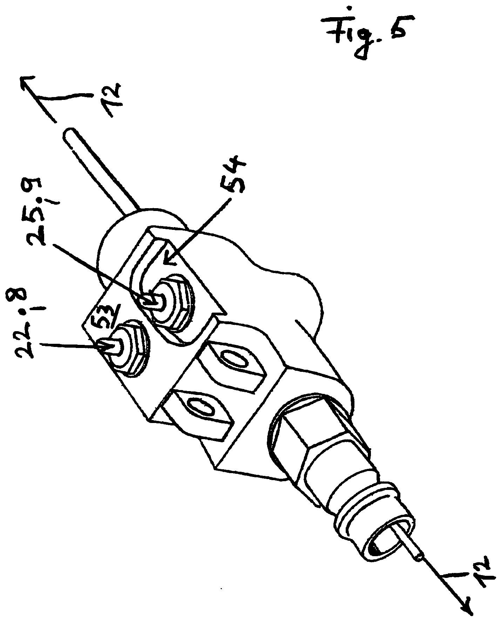

Die Darstellung der Figur 5 unterscheidet sich von der Darstellung der Figur 4 dahingehend, dass der Ventilschalter 22 des Druckluftventils 8 und der Ventilschalter 25 des Fluidventils 9 jeweils auf unterschiedlichen Ebenen 53; 54 angeordnet sind, die von der Längsachse 12 des (nichtgezeigten) Anschlussflansches 10 einen unterschiedlichen Abstand aufweisen.

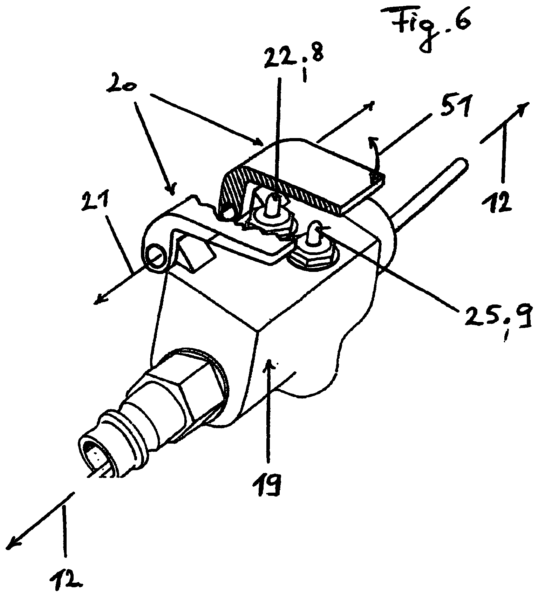

Die Figur 6 entspricht in etwa der Darstellung der Figur 3, mit dem Unterschied, dass in der schematischen Darstellung der Figur 6 der Schalthebel 20 mit seiner Schwenkachse 21 an der Oberseite des Gehäuses 19 angeordnet ist, wobei sich die Schwenkachse 21 in etwa achsparallel zu der Längsachse 12 des Anschlussflansches 10 (nicht gezeigt) erstreckt.

Der Schalthebel 20 ist in der Darstellung der Figur 6 durchbrochen dargestellt.

Der Schalthebel 20 weist dabei im Bereich des Ventilschalters 22 des Druckluftventils 8 eine größere Materialstärke auf, als im Bereich des Ventilschalters 25 des Fluidventils 9.

Zusätzlich sind der Ventilschalter 22 und der Ventilschalter 25 entgegen der Darstellung in Figur 3 in Bezug zur Längsachse 12 des Anschlussflansches 10 (nicht gezeigt) quer angeordnet.

Mit Verschwenken des Schalthebels 20 in Pfeilrichtung 51 betätigt der Schalthebel 20 aufgrund der unterschiedlichen Materialstärke des Schalthebels 20 zuerst den Ventilschalter 22 des Druckluftventils 8. Erst bei weiterem Verschwenken des Schalthebels 20 um die Pfeilrichtung 51 kommt der Schalthebel 20 mit dem Ventilschalter 25 des Fluidventils 9 in Kontakt.

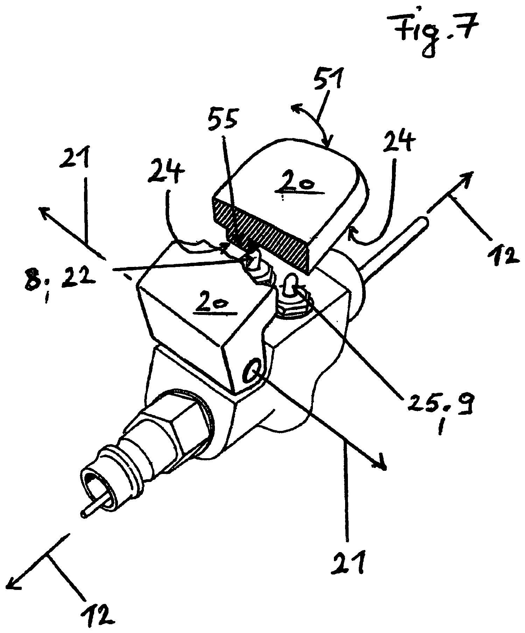

Die Figur 7 entspricht in Bezug der Anordnung der Ventilschalter 22 und 25 der Darstellung der Figur 6, mit dem Unterschied, dass sich die Schwenkachse 21 des Schalthebels 20 quer zur Längsachse 12 des Anschlussflansches 10 (nicht gezeigt) erstreckt.

In der Darstellung der Figur 7 ist der Schalthebel 20 durchbrochen dargestellt.

Die Kontaktfläche 24 des Schalthebels 20 weist auf der Unterseite des Schalthebels 20 ein Podest 55 auf.

Im Bereich des Podestes 55 kommt die Kontaktfläche 24 des Schalthebels 20 bei der Verschwenkung des Schalthebels 20 in Pfeilrichtung 51 zuerst mit dem Ventilschalter 22 des Druckluftventils 8 in Kontakt.

Erst bei weiterem Verschwenken des Schalthebels 20 in Pfeilrichtung 51 kommt die Kontaktfläche 24 des Schalthebels 20 auch mit dem Vetilschalter 25 des Fluidventils 9 in Berührung.

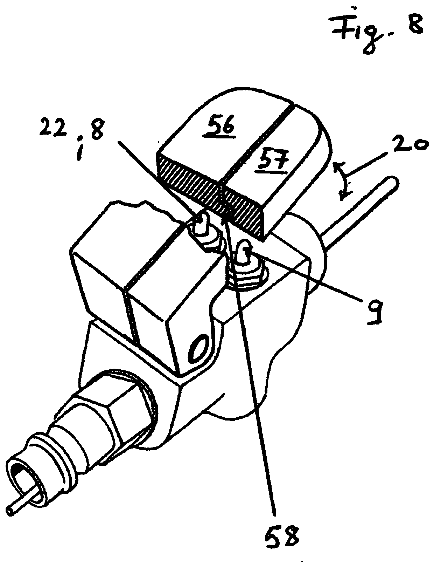

Die Darstellung der Figur 8 entspricht der Darstellung der Figur 7 mit dem Unterschied, dass zwei separate Schalthebel 56; 57 vorgesehen sind.

Der Schalthebel 56 betätigt das Druckluftventil 8, wogegen der Schalthebel 57 das Fluidventil 9 steuert.

Der Schalthebel 57 ist so ausgebildet, dass er den Schalthebel 56 übergreift.

Bei Niederdrücken des Schalthebels 57 in Pfeilrichtung 20 nimmt der Schalthebel 57 den Schalthebel 56 mit, sodass das Fluidventil 9 nur betätigt werden kann, wenn gleichzeitig das Druckluftventil 8 betätigt wird.

Der Schalthebel 56 des Druckluftventils 8 untergreift mit einer Zunge 58 den Schalthebel 57 des Fluidventils 9.

Aufgrund dieser Konstruktionsweise kann das Druckluftventil 8 losgelöst vom Fluidventil 9 separat und individuell angesteuert werden.

Das Fluidventil 9 hingegen kann nur zusammen mit dem Druckluftventil 8 angesprochen und geöffnet werden. Auf diese Weise wird sichergestellt, dass das Fluid, vorzugsweise das Reinigungsmittel nur in Form eines Druckluft-Fluid-Gemisches auf den zu Reinigenden Gegenstand 50 (nicht dargestellt) aufgebracht werden kann.

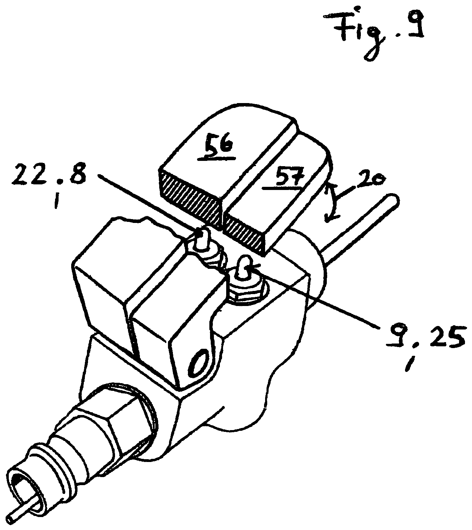

Die Figur 9 entspricht der Figur 8 mit dem Unterschied, dass in der schematischen Darstellung der Figur 9 zwei Schalthebel 56; 57 dargestellt sind, die Individuell und losgelöst voneinander betätigt werden können.

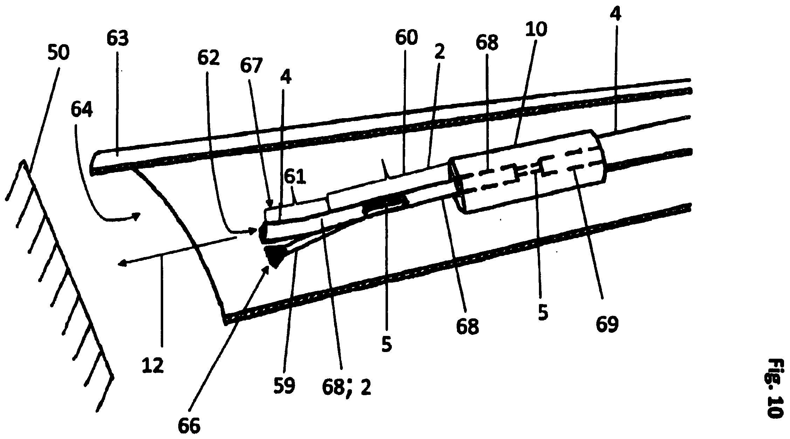

Fig. 10 zeigt eine gasführende Leitung 2, die einen Abschnitt 68 umfasst, der die Auslasseinrichtung 4 aufweist. Dieser Abschnitt 68 ist von dem stromaufwärtigen übrigen Abschnitt 69 der gasführenden Leitung 2 getrennt.

Der die Auslasseinrichtung 4 umfassende Abschnitt 68 der gasführenden Leitung 2 ist in axialer Richtung gegen den stromaufwärtigen übrigen Abschnitt 69 der gasführenden Leitung 2 verschiebbar. Der Abstand zwischen gegeneinander gerichtete Stirnseiten des stromaufwärtigen übrigen Abschnitts 69 der gasführenden Leitung und dem Abschnitt 68 der gasführenden Leitung 2, der die Auslasseinrichtung 4 umfasst ist axial veränderbar.

Der stromaufwärtige übrige Abschnitt 69 und der Abschnitt 68, der die Auslasseinrichtung 4 umfasst sind mittels eines Anschlussflansches 10 axial gasdicht miteinander verbindbar a usgesta ltet.

Die gegeneinander gerichteten Stirnseiten der beiden Abschnitte 68; 69 der gasführenden Leitung 2 ragen in den Anschlussflansch 10 hinein. Der die Auslasseinrichtung 4 umfassende Abschnitt 68 der gasführenden Leitung 2 ist im Inneren des Anschlussflansches 10 gegenüber dem übrigen Abschnitt 69 der gasführenden Leitung 2 gasdicht verschiebbar angeordnet. Zur Abdichtung des Abschnitts 68, der die Auslasseinrichtung 4 umfasst, gegen den Anschlussflansch 10 kann an der Innenwand des Anschlussflansches 10 ein Dichtungsmittel angeordnet sein.

Die keine Unterbrechungen aufweisende Fluidleitung 5 erstreckt sich Inneren der gasführenden Leitung 2. Die Fluidleitung 5 überbrückt die Stirnseiten der Abschnitte 68 und 69 der gasführenden Leitung im Inneren des Anschlussflansches 10.

Die im Inneren des Anschlussflansches 10 verlaufenden Abschnitte 68; 69 sowie die Fluidleitung 5 sind gestrichelt dargestellt.

Fig. 10 zeigt darüber hinaus, dass die Auslasseinrichtung 4 einen Körper 59 zum mechanischen Reinigen der Oberfläche 50 aufweist.

Der Körper 59 ist bürstenförmig ausgestaltet. Der Köper 59 kann auch ein Schwamm oder ein Drahtgebilde zum mechanischen Reinigen sein. Der Körper 59 kann auch ein anderes Element zu mechanischen Reinigen einer Oberfläche 50 sein.

Der Körper 59 ist an der Auslasseinrichtung 4 angeordnet.

Die Auslasseinrichtung 4 umfasst einen sich entlang der Längsachse 12 der gasführenden Leitung 2 erstreckenden Abschnitt 60. Der Körper 59 zum Reinigen der Oberfläche 50 ist an dem Abschnitt 60 der Auslasseinrichtung 4 angeordnet, der sich entlang der Längsachse 12 der gasführenden Leitung 2 erstreckt.

In axialer Richtung ragt das stromabwärts liegende Ende 66 des Körpers 59 zum Reinigen der Oberfläche 50 nicht über das stromabwärts liegende Ende 67 der Auslasseinrichtung 4 hinaus.

Die Auslasseinrichtung 4 umfasst weiter einen, sich an den entlang der Längsachse 12 der gasführenden Leitung 2 erstreckenden Abschnitt 60 stromabwärts anschließenden exzentrisch zur Längsachse 12 der gasführenden Leitung 2 erstreckenden weiteren Abschnitt 61.

Der Körper 59 zum Reinigen der Oberfläche 50 (nicht gezeigt) kann auch an dem Ende 62 des sich stromabwärts anschließenden, exzentrisch zur Längsachse 12 der gasführenden Leitung 2 verlaufenden weiteren Abschnitts 61 angeordnet sein.

Die Auslasseinrichtung 4 ist mit dem Anschlussflansch 10 verbunden. Eine Rotation des Anschlussflansches 4 bewirkt eine Rotation der Auslasseinrichtung 4. Die Rotation der Auslasseinrichtung 4 bewirkt eine Rotation des an der Auslasseinrichtung 4 angeordneten Körpers 59 zum Reinigen der Oberfläche 50 mit der Auslasseinrichtung 4. Der Körper 59 zum Reinigen der Oberfläche 50 rotiert im Inneren einer Umhüllung 63, die die Auslasseinrichtung 4 radial umgibt.

Am Ende 64 der Umhüllung 63 ist ein Adapter (nicht gezeigt) angeordnet. Die Umhüllung 63 ist als hüllenförmiges Rohrprofil ausgestaltet.

Die Umhüllung 63 ist gegenüber dem Gehäuse 19 (nicht gezeigt) radial drehbar. Umgekehrt kann das Gehäuse 19 (nicht gezeigt) gegenüber der die Umhüllung 63 radial drehbar angeordnet sein.

Die Anordnung des Körpers 59 zur mechanischen Reinigung der Oberfläche 50 erweist sich als vorteilhaft, da auf diese Weise die Reinigung der Oberfläche 50 mittels eines Gas-Flüssigkeits-Gemisches 14 durch eine mechanische Reinigung mittels eines Körper 59 zum mechanischen Reinigen der Oberfläche 50 unterstützt werden kann.

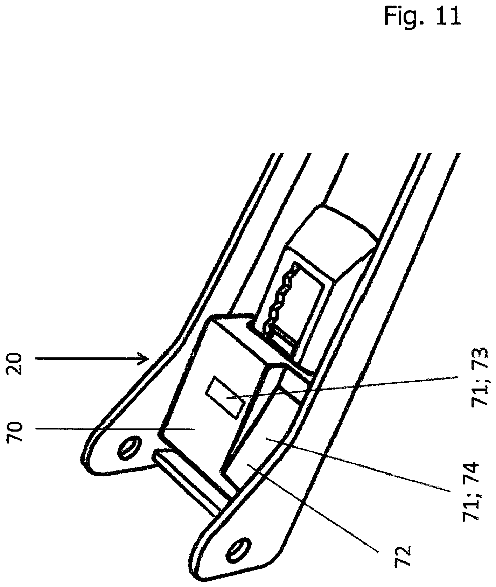

Die Fig. 11 zeigt eine am Schalthebel 20 bewegbar angeordnete Justiereinrichtung 70 mit Aktivierungsbereichen 71, 73, 74. Die Justiereinrichtung 70 ist im Fall der Fig. 11 längs zum Schalthebel 20 verschiebbar.

Der Benutzer verschiebt die Justiereinrichtung 70 mittels eines Schiebers, der an deren Außenseite, in der Fig. 11 nicht sichtbar, auf der Rückseite des Schalthebels 20 angeordnet ist. Die Justiereinrichtung 70 ist in einer Führungsschiene des Schalthebels 20 verschiebbar.

Auf ihrer vom Schalthebel 20 abgewandten Unterseite weist die Justiereinrichtung 70 Aktivierungsbereich 71, 73, 74 auf. Der Aktivierungsbereich 71, 73 ist als ebene Fläche ausgebildet, die auf das Ventil 8, 9 einwirkt, das den Zustrom der Druckluft steuert.

Der Aktivierungsbereich 71, 74 ist keilförmig ausgebildet. Er wirkt auf das Ventil 9, 8 ein, das den Zustrom des Fluids steuert.

Bei der Verschiebung der Justiereinrichtung 70 von der Schwenkachse 21 des Schalthebels 20 weg, bewirkt die Keilform 72 der Justiereinrichtung 70, dass der Ventilschalter 22 (nicht gezeigt) in zunehmendem Maße druckbeaufschlagt wird. Hierdurch kann das Fluidvolumen relativ zur Druckluft gesteigert werden.

Bei der Verschiebung der Justiereinrichtung 70 zu der Schwenkachse 21 des Schalthebels 20 hin bewirkt eine Verringerung des Fluidvolumens relativ zur Druckluft.

### Bezugsziffern

1. System zum Ausbringen von Gemischen
2. Gasführende Leitung
3. Druckluft
4. Auslasseinrichtung
5. Fluidleitung
6. Fluid
7. freibleibend
8. Druckluftventil
9. Fluidventil
10. Anschlussflansch
11. Strömungsrichtung der Luft
12. Längsachse des Anschlussflansches
13. Öffnung
14. Druckluft-Fluid-Gemisch
15. Tüllenförmiges Rohrprofil
16. weiterer Flansch
17. Absaugrohr
18. Griff
19. Gehäuse
20. Schalthebel
21. Schwenkachse des Schalthebels
22. Ventilschalter
23. Ventilschalter
24. Kontaktfläche
25. Ventilschalter
26. Fluidtank
27. Mittel zur Freisetzung von Fluid
30. Auslassmündung
34. oberes Ende
35. Filter
36. Leitungselement
37. Verbindungsflansch
38. Eingang
39. inneres der Druckluftleitung
40. Ausgang
41. Versorgungsleitung
42. Manometer
43. Generator
44. Schelle
45. Knick
46. Pfeilrichtung
47. Pfeilrichtung
48. Pfeil
49. Verwirbelung
50. Gegenstand
51. Pfeil
52. Schwenklager
53. Ebene
54. Ebene
55. Podest
56. Schalthebel
57. Schalthebel
58. Zunge
59. Körper
60. sich entlang der Längsachse der gasführenden Leitung erstreckender Abschnitt
61. sich exzentrisch zur Längsachse der gasführenden Leitung verlaufender weiterer Abschnitt
62. Ende des sich stromabwärts anschließenden, exzentrisch zur Längsachse der gasführenden Leitung verlaufenden weiteren Abschnitts
63. Umhüllung
64. Ende der Umhüllung
66. stromabwärts liegende Ende des Körpers
67. stromabwärts liegende Ende der Auslasseinrichtung
68. Abschnitte
69. Abschnitt
70. Justiereinrichtung
71, 73, 74 Aktivierungsbereich
72. Keilform

## Patentansprüche

1. Reinigungssystem, bei dem das System eine Fluidleitung (5) und ein Gehäuse (19) umfasst, wobei das Gehäuse (19) des Systems eine gasführende Leitung (2) und eine Einrichtung zum Ausbringen eines Gemisches aufweist, und wobei das Gemisch vom System ausgebracht wird, wobei das Gemisch aus wenigstens einem Gasstrom und wenigstens einem Fluidstrom erzeugbar ist und auf eine Oberfläche (50) ausgebracht wird, wobei das Gemisch (14) der Einrichtung zum Ausbringen des Gemisches (14) zuführbar ist,
wobei die Einrichtung zum Ausbringen des Gemisches (14) die gasführende Leitung (2) umfasst, in deren Innerem (39) sich axial eine Fluidleitung (5) erstreckt, und die gasführende Leitung (2) sowie die Fluidleitung (5) als Auslasseinrichtung (4) zum Ausbringen des Gemisches (14) ausgestaltet sind, **dadurch gekennzeichnet, dass** die Auslasseinrichtung (4) weiter so ausgestaltet ist, dass sie exzentrisch zur Längsachse (12) der gasführenden Leitung (2) um diese drehbar ist, und weiterhin einen Körper (59) zum Reinigen der Oberfläche (50) aufweist, wobei
die gasführende Leitung (2) zwei Abschnitte (68, 69) hat, die gegeneinander gerichtete Stirnseiten aufweisen, wobei die Stirnseiten in einen Anschlussflansch (10) hineinragen, und
ein Abschnitt (68, 69) der gasführenden Leitung (2) im Inneren des Anschlussflansches (10) gegenüber dem übrigen Abschnitt (68, 69) der gasführenden Leitung (2) gasdicht verschiebbar angeordnet ist, wobei
zur Abdichtung des Abschnitts (68, 69) gegen den Anschlussflansch (10) an der Innenwand des Anschlussflansches (10) ein Dichtungsmittel angeordnet ist, und
die Fluidleitung (5) die Stirnseiten der Abschnitte (68, 69) der gasführenden Leitung (2) im Inneren des Anschlussflansches (10) überbrückt, wobei
die Fluidleitung (5) entlang der Längsachse des Anschlussflansches (10) durch den Anschlussflansch (10) hindurch verläuft und in die Auslasseinrichtung (4) einmündet, und der Anschlussflansch (10) radial um seine Längsachse drehbar, an der gasführenden Leitung (2) angeordnet ist.

2. Reinigungssystem nach Anspruch 1, **dadurch gekennzeichnet, dass** die Einrichtung zum Ausbringen des Gemisches (14) eine Umhüllung (63) aufweist, die die Auslasseinrichtung (4) radial umgibt.

3. Reinigungssystem nach Anspruch 2, **dadurch gekennzeichnet, dass** die Umhüllung (63) als hüllenförmiges Rohrprofil (15) ausgestaltet ist, und weiterhin an deren Ende (64) ein Adapter anbringbar ist.

4. Reinigungssystem nach Anspruch 1, **dadurch gekennzeichnet, dass** ein die Auslasseinrichtung (4) umfassender Abschnitt (68) der gasführenden Leitung (2) von einem stromaufwärtigen übrigen Abschnitt (69) der gasführenden Leitung (2) getrennt ist und beide Abschnitte (68; 69) mittels eines Anschlussflansches (10) gasdicht wieder verbindbar ausgestaltet sind.

5. Reinigungssystem nach Anspruch 1, **dadurch gekennzeichnet, dass** das Gemisch (14) aus der Auslasseinrichtung (4) spiralförmig in die Einrichtung zum Ausbringen des Gemisches (14) freisetzbar ist.

6. Reinigungssystem nach Anspruch 1, **dadurch gekennzeichnet, dass** die Auslasseinrichtung (4) an ihrem stromaufwärtigen Ende drehbar an einem Anschlussflansch (10) gelagert ist.

7. Reinigungssystem nach Anspruch 1, **dadurch gekennzeichnet, dass** die Auslasseinrichtung (4) durch Freisetzen des Gemisches (14) in die Einrichtung zum Ausbringen des Gemisches (14) in Rotation um ihre Längsachse (12) versetzbar ist.

8. Reinigungssystem nach einem oder mehreren der vorausgehenden Ansprüche, **dadurch gekennzeichnet, dass** das Gemisch (14) in der Einrichtung zur Ausbringung des Gemisches (14) erzeugbar ist.

9. Reinigungssystem nach einem oder mehreren der vorausgehenden Ansprüche, **dadurch gekennzeichnet, dass** wenigstens eine Ventileinrichtung angeordnet ist, mit der der Gasstrom und/oder der Fluidstrom regelbar ist.

10. Reinigungssystem nach Anspruch 1, **dadurch gekennzeichnet, dass** die Auslasseinrichtung (4) wenigstens eine Krümmung (45) aufweist.

11. Reinigungssystem nach einem oder mehreren der vorausgehenden Ansprüche, **dadurch gekennzeichnet, dass** die Fluidleitung (5) mit einem Fluid (6) aus einem Fluidtank (26) speisbar ist, der mit dem Gasstrom bedrückbar ist.

12. Reinigungssystem nach einem oder mehreren der vorausgehenden Ansprüche, **dadurch gekennzeichnet, dass** das Gas (3) in Form von Druckluft vorliegt, die von einem Generator (43) bereitstellbar ist.

13. Reinigungssystem nach Anspruch 1, **dadurch gekennzeichnet, dass** die gasführende Leitung (2) einen Eingang (38) aufweist, über den die Fluidleitung (5) in die gasführende Leitung (2) einführbar ist.

14. Reinigungssystem nach Anspruch 1, **dadurch gekennzeichnet, dass** die gasführende Leitung (2) einen Ausgang (40) aufweist, der mit dem Fluidtank (26) über eine Versorgungsleitung (41) verbindbar ist.

15. Reinigungssystem nach Anspruch 1, **dadurch gekennzeichnet, dass** das wenigstens eine Ventil (8; 9) und/oder die Fluidleitung (5) und/oder die gasführende Leitung (2) in einem Gehäuse (19) aufgenommen sind.

16. Reinigungssystem nach Anspruch 1, **dadurch gekennzeichnet, dass** an die Einrichtung zum Ausbringen des Gemisches (14) ein Absaugrohr (17) einer Absaugeinrichtung anschließbar ist.

17. Reinigungssystem nach Anspruch 1, **dadurch gekennzeichnet, dass** die das Fluid führende Leitung (5) Mittel zur Freisetzung von Fluid (27) in die Auslasseinrichtung (4) aufweist.

18. Reinigungssystem nach Anspruch 17, **dadurch gekennzeichnet, dass** durch Vorbeiströmen des Gases an den Mitteln zur Freisetzung von Fluid (27) in der Auslasseinrichtung (4) ein Unterdruck erzeugbar ist.

19. Reinigungssystem nach einem oder mehreren der vorausgehenden Ansprüche, **dadurch gekennzeichnet, dass** sich im Innerem der Einrichtung zum Ausbringen des Gemisches axial zu deren Längsachse (12) die Auslasseinrichtung (4) erstreckt, in deren Innerem (39) sich die Fluidleitung (5) erstreckt, wobei die Auslasseinrichtung (4) so ausgestattet ist, dass sie exzentrisch zur Längsachse (12) der gasführenden Leitung (2) um diese drehbar ist, und weiterhin einen Körper (59) zum Reinigen der Oberfläche (50) aufweist.

20. Reinigungssystem nach Anspruch 9, **gekennzeichnet durch** wenigstens ein den Fluidstrom steuerndes Ventil (9) und/oder wenigstens ein Ventil (8) das den Gasstrom steuert, wobei zur Ansteuerung der Ventile (8, 9) wenigstens ein Ventilschalter (22, 23, 25) vorgesehen ist.

21. Reinigungssystem nach Anspruch 20, wobei die Ventilschalter (22, 23, 25) in Längsrichtung der gasführenden Leitung (2) angeordnet sind.

22. Reinigungssystem nach Anspruch 20, wobei die Ventilschalter (22, 23, 25) relativ zu einander auf unterschiedlichen Ebenen (53, 54) angeordnet sind.

23. Reinigungssystem nach Anspruch 20, wobei der wenigstens eine Ventilschalter (22, 23, 25) mittels wenigstens eines Schalthebels (56, 57) betätigbar ist.

24. Reinigungssystem nach Anspruch 1, wobei eine Justiereinrichtung (70) ein bewegbarer geometrischer Körper ist, der Aktivierungsbereiche (71, 73, 74) umfasst, von denen wenigstens ein Aktivierungsbereich (73) zumindest mittelbar auf wenigstens einen Fluidstrom (6) einwirkt und wenigstens ein anderer Aktivierungsbereich (74) zumindest mittelbar auf den Gasstrom einwirkt.

25. Reinigungssystem nach Anspruch 24, wobei der Aktivierungsbereich (71, 73, 74) der Justiereinrichtung (70) vorzugsweise eine Keilform (72) und/oder die Form zweier zueinander entgegen gerichteter Doppelkeile und/oder die Form einer Kugel und/oder die Form einer Halbkugel und/oder die Form eines Exzenters aufweist.

26. Reinigungssystem nach einem oder mehreren der Ansprüche 24 bis 25, wobei die Regelung des Gasstroms und/oder wenigstens eines Fluidstroms (6) durch die Justiereinrichtung (70) stufenlos erfolgt.

27. Reinigungssystem nach einem oder mehreren der Ansprüche 24 bis 25, wobei der Aktivierungsbereich (71, 73, 74) der Justiereinrichtung (70) auf einen Ventilschalter (22, 23, 25) einwirkt.

28. Reinigungssystem nach einem oder mehreren der Ansprüche 24 bis 25, wobei der Aktivierungsbereich (71, 73, 74) der Justiereinrichtung (70) als Ventil ausgebildet ist, das auf den Fluidstrom (6) einwirkt.

## Claims

1. A cleaning system in which the system comprises a fluid conduit (5) and a housing (19), the housing (19) of the system having a gas-carrying conduit (2) and a device for dispensing a mixture, and the mixture being dispensed from the system, the mixture being producible from at least one gas stream and at least one fluid stream and being dispensed onto a surface (50), the mixture (14) being suppliable to the device for dispensing the mixture (14), the device for dispensing the mixture (14) comprising the gas-carrying conduit (2) in the interior (39) of which a fluid conduit (5) extends axially, and the gas-carrying conduit (2) and the fluid conduit (5) being configured as outlet device (4) for dispensing the mixture (14), **characterized in that** the outlet device (4) is further configured to be rotatable about the gas-carrying conduit (2) eccentrically to the longitudinal axis (12) thereof, and further has a body (59) for cleaning the surface (50), wherein
the gas-carrying conduit (2) has two sections (68, 69) having end faces directed towards one another, the end faces projecting into a connecting flange (10), and
a section (68, 69) of the gas-carrying conduit (2) is arranged in the interior of the connecting flange (10) opposite to the remaining section (68, 69) of the gas-carrying conduit (2) in a gas-tight displaceable manner, wherein
a sealing means is arranged on the inner wall of the connecting flange (10) for sealing the section (68, 69) against the connecting flange (10), and
the fluid conduit (5) bridges the end faces of the sections (68, 69) of the gas-carrying conduit (2) in the interior of the connecting flange (10), wherein
the fluid conduit (5) runs through the connecting flange (10) along the longitudinal axis of the connecting flange (10) and opens into the outlet device (4), and
the connecting flange (10) is radially rotatable about its longitudinal axis and is arranged on the gas-carrying conduit (2).

2. The cleaning system according to claim 1, **characterized in that** the device for dispensing the mixture (14) has a casing (63) radially surrounding the outlet device (4).

3. The cleaning system according to claim 2, **characterized in that** the casing (63) is configured as a sheath-shaped tubular profile (15), and furthermore an adapter is attachable to its end (64).

4. The cleaning system according to claim 1, **characterized in that** a section (68) of the gas-carrying conduit (2) comprising the outlet device (4) is separated from an upstream remaining section (69) of the gas-carrying conduit (2), and both sections (68; 69) are configured to be connectable again in a gas-tight manner by means of a connecting flange (10).

5. The cleaning system according to claim 1, **characterized in that** the mixture (14) is spirally releasable from the outlet device (4) into the device for dispensing the mixture (14).

6. The cleaning system according to claim 1, **characterized in that** the outlet device (4) is mounted rotatably on a connecting flange (10) at its upstream end.

7. The cleaning system according to claim 1, **characterized in that** the outlet device (4) is settable in rotation about its longitudinal axis (12) by releasing the mixture (14) into the device for dispensing the mixture (14).

8. The cleaning system according to one or more of the preceding claims, **characterized in that** the mixture (14) is producible in the device for dispensing the mixture (14).

9. The cleaning system according to one or more of the preceding claims, **characterized in that** at least one valve device is arranged for control of gas stream and/or fluid stream.

10. The cleaning system according to claim 1, **characterized in that** the outlet device (4) has at least one curvature (45).

11. The cleaning system according to one or more of the preceding claims, **characterized in that** the fluid conduit (5) is feedable with a fluid (6) from a fluid tank (26) being pressurizable with the gas flow.

12. The cleaning system according to one or more of the preceding claims, **characterized in that** the gas (3) is present in the form of compressed air providable by a generator (43).

13. The cleaning system according to claim 1, **characterized in that** the gas-carrying conduit (2) has an inlet (38) via which the fluid conduit (5) is introducible into the gas-carrying conduit (2).

14. The cleaning system according to claim 1, **characterized in that** the gas-carrying conduit (2) has an outlet (40) connectable to the fluid tank (26) via a supply conduit (41).

15. The cleaning system according to claim 1, **characterized in that** the at least one valve (8; 9) and/or the fluid conduit (5) and/or the gas-carrying conduit (2) are accommodated in a housing (19).

16. The cleaning system according to claim 1, **characterized in that** a suction pipe (17) of a suction device is connectable to the device for dispensing the mixture (14).

17. The cleaning system according to claim 1, **characterized in that** the fluid-carrying conduit (5) has means for releasing fluid (27) into the outlet device (4).

18. The cleaning system according to claim 17, **characterized in that** a negative pressure is producible by the gas flowing past the means for releasing fluid (27) in the outlet device (4).

19. The cleaning system according to one or more of the preceding claims, **characterized in that** the outlet device (4), in the interior (39) of which the fluid conduit (5) extends, extends inside the device for dispensing the mixture axially to its longitudinal axis (12), the outlet device (4) being equipped to be rotatable about the gas-carrying conduit (2) eccentrically to the longitudinal axis (12), and further having a body (59) for cleaning the surface (50).

20. The cleaning system according to claim 9, **characterized by** at least one valve (9) controlling the fluid stream and/or at least one valve (8) controlling the gas stream, at least one valve switch (22, 23, 25) being provided for controlling the valves (8, 9).

21. The cleaning system according to claim 20, wherein the valve switches (22, 23, 25) are arranged in the longitudinal direction of the gas-carrying conduit (2).

22. The cleaning system according to claim 20, wherein the valve switches (22, 23, 25) are arranged on different levels (53, 54) relative to each other.

23. The cleaning system according to claim 20, wherein the at least one valve switch (22, 23, 25) is actuatable by means of at least one switching lever (56, 57).

24. The cleaning system according to claim 1, wherein an adjusting device (70) is a movable geometric body comprising activation areas (71, 73, 74), at least one activation area (73) of which acting at least indirectly on at least one fluid stream (6), and at least one other activation area (74) acting at least indirectly on the gas stream.

25. The cleaning system according to claim 24, wherein the activation area (71, 73, 74) of the adjusting device (70) preferably has a wedge shape (72) and/or the shape of two opposed double wedges and/or the shape of a sphere and/or the shape of a hemisphere and/or the shape of an eccentric.

26. The cleaning system according to one or more of claims 24 to 25, wherein regulation of the gas stream and/or at least one fluid stream (6) is made continuously by the adjusting device (70).

27. The cleaning system according to one or more of claims 24 to 25, wherein the activation area (71, 73, 74) of the adjusting device (70) acts on a valve switch (22, 23, 25).

28. The cleaning system according to one or more of claims 24 to 25, wherein the activation area (71, 73, 74) of the adjusting device (70) is designed as a valve acting on the fluid stream (6).

## Revendications

1. Système de nettoyage, dans lequel le système comprend une conduite de fluide (5) et un boîtier (19), le boîtier (19) du système présentant une conduite de gaz (2) et un dispositif de distribution d'un mélange, et le mélange étant distribué par le système, le mélange étant générable à partir d'au moins un courant de gaz et d'au moins un courant de fluide et étant distribué sur une surface (50), le mélange (14) pouvant être amené au dispositif de distribution du mélange (14), le dispositif de distribution du mélange (14) comprenant la conduite de gaz (2), à l'intérieur (39) de laquelle s'étend axialement une conduite de fluide (5), et la conduite de gaz (2) ainsi que la conduite de fluide (5) étant conçues comme dispositif de sortie (4) pour distribuer le mélange (14), **caractérisé en ce que** le dispositif de sortie (4) est en outre conçu pour être tournable autour de l'axe longitudinal (12) de la conduite de gaz (2) de manière excentrée par rapport à celui-ci, et présente en outre un corps (59) pour nettoyer la surface (50),
la conduite de gaz (2) ayant deux sections (68, 69) qui présentent des faces frontales orientées l'une vers l'autre, les faces frontales pénétrant dans une bride de raccordement (10), et
une section (68, 69) de la conduite de gaz (2) étant disposée à l'intérieur de la bride de raccordement (10) de manière à être déplaçable de façon étanche au gaz par rapport à la section restante (68, 69) de la conduite de gaz (2),
un moyen d'étanchéité étant disposé sur la paroi intérieure de la bride de raccordement (10) pour assurer l'étanchéité de la section (68, 69) contre la bride de raccordement (10), et
la conduite de fluide (5) pontant les faces frontales des sections (68, 69) de la conduite de gaz (2) à l'intérieur de la bride de raccordement (10),
la conduite de fluide (5) s'étendant le long de l'axe longitudinal de la bride de raccordement (10) à travers la bride de raccordement (10) et débouchant dans le dispositif de sortie (4), et
la bride de raccordement (10) étant disposée de manière radialement tournable autour de son axe longitudinal, sur la conduite de gaz (2).

2. Système de nettoyage selon la revendication 1, **caractérisé en ce que** le dispositif de distribution du mélange (14) présente une enveloppe (63) qui entoure radialement le dispositif de sortie (4).

3. Système de nettoyage selon la revendication 2, **caractérisé en ce que** l'enveloppe (63) est conçue comme un profilé tubulaire (15) en forme d'enveloppe, et en outre un adaptateur est montable à son extrémité (64).

4. Système de nettoyage selon la revendication 1, **caractérisé en ce qu'**une section (68) de la conduite de gaz (2) comprenant le dispositif de sortie (4) est séparé d'une autre section (69) de la conduite de gaz (2) située en amont et **en ce que** les deux sections (68 ; 69) sont conçues de manière à nouveau connectable de manière étanche au gaz au moyen d'une bride de raccordement (10).

5. Système de nettoyage selon la revendication 1, **caractérisé en ce que** le mélange (14) est libérable en forme de spirale à partir du dispositif de sortie (4) dans le dispositif de distribution du mélange (14).

6. Système de nettoyage selon la revendication 1, **caractérisé en ce que** le dispositif de sortie (4) est monté de manière tournable à son extrémité amont sur une bride de raccordement (10).

7. Système de nettoyage selon la revendication 1, **caractérisé en ce que** le dispositif de sortie (4) peut être mis en rotation autour de son axe longitudinal (12) en libérant le mélange (14) dans le dispositif de distribution du mélange (14).

8. Système de nettoyage selon une ou plusieurs des revendications précédentes, **caractérisé en ce que** le mélange (14) est générable dans le dispositif de distribution du mélange (14).

9. Système de nettoyage selon une ou plusieurs des revendications précédentes, **caractérisé en ce qu'**au moins un dispositif de valve est disposé, avec lequel le flux de gaz et/ou le flux de fluide est réglable.

10. Système de nettoyage selon la revendication 1, **caractérisé en ce que** le dispositif de sortie (4) présente au moins une courbure (45).

11. Système de nettoyage selon une ou plusieurs des revendications précédentes, **caractérisé en ce que** la conduite de fluide (5) est alimentable par un fluide (6) provenant d'un réservoir de fluide (26) qui est pressurisable par le flux de gaz.

12. Système de nettoyage selon une ou plusieurs des revendications précédentes, **caractérisé en ce que** le gaz (3) existe sous la forme d'air comprimé qui est fournissable par un générateur (43).

13. Système de nettoyage selon la revendication 1, **caractérisé en ce que** la conduite de gaz (2) présente une entrée (38) par laquelle la conduite de fluide (5) est introduisable dans la conduite de gaz (2).

14. Système de nettoyage selon la revendication 1, **caractérisé en ce que** la conduite de gaz (2) présente une sortie (40) qui est connectable au réservoir de fluide (26) par une conduite d'alimentation (41).

15. Système de nettoyage selon la revendication 1, **caractérisé en ce que** l'au moins une valve (8 ; 9) et/ou la conduite de fluide (5) et/ou la conduite de gaz (2) sont logées dans un boîtier (19).

16. Système de nettoyage selon la revendication 1, **caractérisé en ce qu'**un tube d'aspiration (17) d'un dispositif d'aspiration est raccordable au dispositif de distribution du mélange (14).

17. Système de nettoyage selon la revendication 1, **caractérisé en ce que** la conduite (5) transportant le fluide présente des moyens de libération de fluide (27) dans le dispositif de sortie (4).

18. Système de nettoyage selon la revendication 17, **caractérisé en ce qu'**une dépression est générable en faisant passer le gaz devant les moyens de libération de fluide (27) dans le dispositif de sortie (4).

19. Système de nettoyage selon l'une ou plusieurs des revendications précédentes, **caractérisé en ce qu'**à l'intérieur du dispositif de distribution du mélange s'étend, axialement par rapport à son axe longitudinal (12), le dispositif de sortie (4) à l'intérieur (39) duquel s'étend la conduite de fluide (5), le dispositif de sortie (4) étant en outre tournable autour de l'axe longitudinal (12) de la conduite de gaz (2) de manière excentrée par rapport à celui-ci, et présente en outre un corps (59) pour nettoyer la surface (50),

20. Système de nettoyage selon la revendication 9, **caractérisé par** au moins une valve (9) commandant le flux de fluide et/ou au moins une valve (8) commandant le flux de gaz, au moins un commutateur de valve (22, 23, 25) étant prévu pour la commande des valves (8, 9).

21. Système de nettoyage selon la revendication 20, dans lequel les commutateurs de valve (22, 23, 25) sont disposés dans la direction longitudinale de la conduite de gaz (2).

22. Système de nettoyage selon la revendication 20, dans lequel les commutateurs de valve (22, 23, 25) sont disposés à des niveaux différents (53, 54) les uns par rapport aux autres.

23. Système de nettoyage selon la revendication 20, dans lequel l'au moins un commutateur de valve (22, 23, 25) est actionnable au moyen d'au moins un levier de commutation (56, 57).

24. Système de nettoyage selon la revendication 1, dans lequel un dispositif de réglage (70) est un corps géométrique mobile qui comprend des zones d'activation (71, 73, 74), dont au moins une zone d'activation (73) agit au moins indirectement sur au moins un flux de fluide (6) et au moins une autre zone d'activation (74) agit au moins indirectement sur le flux de gaz.

25. Système de nettoyage selon la revendication 24, dans lequel la zone d'activation (71, 73, 74) du dispositif de réglage (70) présente de préférence une forme de coin (72) et/ou la forme de deux coins doubles orientés en sens inverse l'un de l'autre et/ou la forme d'une sphère et/ou la forme d'une demi-sphère et/ou la forme d'un excentrique.

26. Système de nettoyage selon une ou plusieurs des revendications 24 à 25, dans lequel la régulation du flux de gaz et/ou d'au moins un flux de fluide (6) est réalisée de manière continue par le dispositif de réglage (70).

27. Système de nettoyage selon l'une ou plusieurs des revendications 24 à 25, dans lequel la zone d'activation (71, 73, 74) du dispositif de réglage (70) agit sur un commutateur de valve (22, 23, 25).

28. Système de nettoyage selon une ou plusieurs des revendications 24 à 25, dans lequel la zone d'activation (71, 73, 74) du dispositif de réglage (70) est réalisée sous la forme d'une valve qui agit sur le flux de fluide (6).
